Europäisches Patentamt

European Patent Office

Office européen des brevets

(19)

(11) **EP 0 945 320 B1**

(12) **FASCICULE DE BREVET EUROPEEN**

(45) Date de publication et mention
de la délivrance du brevet:
**26.07.2006   Bulletin 2006/30**

(51) Int Cl.:
***B60T 8/00*** *(2006.01)*   ***B60K 28/16*** *(2006.01)*

(21) Numéro de dépôt: **99400722.7**

(22) Date de dépôt: **24.03.1999**

(54) **Procédé de contrôle du comportement dynamique d'un véhicule routier**

Regelungsprozess für das dynamische Verhalten eines Strassenfahrzeuges

Control process for the dynamic behaviour of a road vehicle

(84) Etats contractants désignés:
**DE ES**

(30) Priorité: **24.03.1998   FR 9803608**

(43) Date de publication de la demande:
**29.09.1999   Bulletin 1999/39**

(73) Titulaire: **Renault s.a.s.**
**92100 Boulogne Billancourt (FR)**

(72) Inventeurs:
• **Delrieu, Frédéric**
**92800 Puteaux (FR)**
• **Besrest, Ronan**
**75014 Paris (FR)**
• **Couvignou, Philippe**
**92100 Boulogne Billancourt (FR)**

(74) Mandataire: **Zapalowicz, Francis**
**Bureau Casalonga & Josse**
**Bayerstrasse 71/73**
**80335 München (DE)**

(56) Documents cités:
**EP-A- 0 392 165      DE-A- 4 229 504**
**US-A- 4 898 431      US-A- 5 506 770**
**US-A- 5 700 073**

## Description

L'invention concerne le contrôle du comportement dynamique d'un véhicule routier, et plus particulièrement le contrôle et la correction automatique de la stabilité d'un véhicule par rapport à la trajectoire désirée par le conducteur en virage.

Le document EP-A-0 392 165 décrit un procédé de contrôle du comportement dynamique d'un vehicule routier selon le préambule de la revendication 1.

Il existe de nombreux systèmes pour contrôler la stabilité du comportement dynamique d'un véhicule routier. Les plus anciens et les plus connus sont le système anti-blocage des roues freinées ou système ABS et le système anti-patinage des roues motrice ou système ASR. Ces systèmes évitent la perte de stabilité latérale résultant d'un blocage ou d'un patinage des roues d'un véhicule lors d'actions de freinage ou d'accélération moteur commandées par le conducteur. Cependant, ces systèmes sont insuffisants pour contrôler la stabilité latérale d'un véhicule dans toutes les situations de conduite.

D'autres systèmes, plus récents mettent en oeuvre un freinage asymétrique des roues afin de corriger les instabilités en lacet du véhicule. Ces systèmes, dits de contrôle actif en lacet, ont pour but de créer automatiquement des moments de lacet afin de corriger des mouvements instables tels que embardée, tête-à-queue, glissade, «tout-droit» en virage etc. Les moments en lacet sont créés par l'application asymétrique de couples de freinage individualisés en chaque roue, ces couples étant calculés par des algorithmes qui comparent un comportement stable nominal dit de référence, par rapport au comportement réel du véhicule dans le plan horizontal (vitesse de lacet, accélération latérale), ces deux comportements étant estimés grâce à des capteurs embarqués (gyromètre de lacet, angle de braquage du volant, accéléromètre latéral).

Ces systèmes de contrôle actif en lacet sont efficaces pour corriger les embardées sur-vireuses d'un véhicule apparaissant notamment en courbe ou lors du freinage. Cependant, ces systèmes sont peu efficaces pour corriger des sous-virages excessifs. En effet, l'efficacité des moments correcteurs de lacet créés par le freinage asymétrique est limitée par la capacité des pneumatiques à transmettre les forces de guidage nécessaires pour faire tourner le véhicule.

Un exemple typique illustrant l'inefficacité de ces systèmes existants, consiste à aborder un virage avec une vitesse trop élevée compte tenu des limites physiques imposées par le coefficient d'adhérence $\mu$ du contact entre les pneumatiques et le sol dans le virage : l'accélération latérale du véhicule étant donnée par $\gamma_T = V^2 / R_v$ où $R_v$ est le rayon de la trajectoire du véhicule et V est sa vitesse longitudinale, les lois de la physique contraignent $\gamma_T$ à rester inférieure à la valeur maximale, dite de saturation, $\gamma_{Tsat} = \mu \times g$, où g est l'accélération de la gravité terrestre (g = 9.81 m/s2) et le coefficient

d'adhérence $\mu$ est compris entre 0 (verglas) et 1 environ (sol sec). De ce fait, la courbure maximale $1/R_v$ que peut suivre le véhicule vaut $(1/R_v)_{max} = \gamma_{Tsat} / V^2 = \mu \times g / V^2$, quels que soient les moments correcteurs de lacet générés par un système de contrôle actif en lacet. Si la vitesse longitudinale V est excessive et ne diminue pas significativement et rapidement, alors il devient impossible de respecter la courbure $1/R_r$ de la route et le véhicule continue de sous-virer.

Un autre exemple illustrant l'inefficacité des systèmes existants de contrôle actif en lacet peut être observé avec un véhicule abordant un virage trop vite compte tenu du risque de renversement. Avec certaines automobiles du type monospace, véhicule tout-terrain ou fourgonnette ainsi qu'avec la plupart des poids lourds (camions, autocars, véhicules spéciaux), l'accélération latérale $\gamma_T = V^2 / R_r$ subie dans un virage peut dépasser la limite maximale $\gamma_{Tsat}$ imposée ici par la hauteur du centre de gravité du véhicule, et ainsi provoquer le renversement de ce dernier. Certains systèmes existants de contrôle actif en lacet limitent le risque de renversement en virage en créant des moments de lacet qui imposent à l'accélération latérale du véhicule, $\gamma_T = V^2 / R_v$, de rester en dessous d'un certain seuil de sécurité. Les moments de lacet ainsi créés font en fait sous-virer le véhicule car, d'une part le rayon de trajectoire $R_v$ suivi par le véhicule est forcé de rester supérieur à la valeur minimale $R_{v\,min} = V^2 / \gamma_{Tsat}$, et d'autre part la vitesse longitudinale V n'est pas diminuée significativement par les moments de lacet. La seule façon de suivre, sans se renverser et sans sous-virer, la trajectoire imposée par un virage est de réduire rapidement la vitesse V quand celle-ci est trop élevée.

Il existe également d'autres systèmes de contrôle actif en lacet qui utilisent des dispositifs électroniques agissant sur le braquage d'une ou plusieurs roues ou agissant sur la répartition du couple moteur par action sur le différentiel mécanique. Pour les mêmes raisons que les systèmes anti-lacet utilisant un dispositif de freinage asymétrique, ces systèmes ne génèrent pas une décélération longitudinale suffisante du véhicule permettant de corriger avec efficacité les écarts de sous-virage.

De manière générale, tous les systèmes existants de contrôle en lacet d'un véhicule ne mettent pas en oeuvre une décélération suffisante du véhicule en virage permettant de réduire significativement la vitesse afin de respecter les limites physiques imposées par l'adhérence ou le risque de renversement. Par conséquent, la trajectoire souhaitée par le conducteur par l'intermédiaire du volant ne peut pas être respectée, si bien que les corrections générées par les systèmes existants de contrôle actif en lacet sont insuffisantes et ne diminuent pas les écarts de sous-virage.

Un but de la présente invention est donc de mettre en oeuvre au sein d'un système approprié, un procédé de contrôle du comportement dynamique d'un véhicule routier, par réduction automatique de la vitesse permettant ainsi de limiter les problèmes de sous-virage en courbe. La réduction de la vitesse permet au conducteur de conserver le contrôle de son véhicule en lui permettant, dans la limite des contraintes physiques et des capacités du système, de suivre la trajectoire qu'il désire sans sous-virer.

L'invention a donc pour objet un procédé de contrôle du comportement dynamique d'un véhicule routier, dans lequel on calcule un écart de comportement en sous-virage du véhicule à partir de la valeur de l'angle de braquage appliqué par le conducteur sur le volant, de la valeur courante de la vitesse longitudinale du véhicule et d'une valeur d'accélération latérale maximale (accélération de saturation) estimée en temps réel, on calcule à partir de la valeur courante de cet écart de comportement, une valeur de décélération longitudinale de consigne destinée au système de freinage du véhicule ainsi qu'une valeur de consigne de réduction du couple moteur, de façon à réduire la vitesse longitudinale du véhicule et ce tant que l'écart de comportement subsiste.

On peut calculer l'écart de comportement également à partir de la valeur courante de la vitesse de lacet du véhicule, ou encore à partir de la valeur courante de l'accélération transversale du véhicule éventuellement en combinaison avec la vitesse de lacet.

On applique avantageusement aux roues du véhicule des forces de freinage tenant compte de ladite valeur de décélération longitudinale de consigne et de la valeur de consigne de freinage provenant de l'actionnement de la pédale de frein par le conducteur du véhicule. Ainsi, on peut privilégier la plus grande des deux valeurs de consigne pour déterminer les forces de freinage à appliquer aux roues du véhicule.

Selon un mode de mise en oeuvre du procédé, on détermine la valeur de décélération longitudinale de consigne à partir d'une fonction de l'écart de comportement, cette fonction pourra être linéaire par morceaux et croissante. On peut également procéder en deux temps, à savoir que l'on peut déterminer une décélération longitudinale cible de consigne à partir d'une fonction de l'écart de comportement, cette fonction étant linéaire par morceaux et croissante, puis on détermine ladite valeur de décélération longitudinale de consigne en modulant temporellement ladite décélération longitudinale cible.

Par ailleurs, on peut déterminer ladite valeur de consigne de réduction du couple-moteur également à partir d'une fonction de l'écart de comportement, cette fonction pouvant être linéaire par morceaux et croissante.

D'autres avantages et caractéristiques de l'invention apparaîtront dans l'examen de la description de modes de réalisation et de mise en oeuvre, nullement limitatifs et des dessins annexés sur lesquels :

- la figure 1 illustre schématiquement différents paramètres relatifs au comportement dynamique d'un véhicule,
- la figure 2 est un schéma fonctionnel d'un dispositif de contrôle de vitesse selon l'invention permettant la mise en oeuvre du procédé selon l'invention,

- la figure 3 est un schéma fonctionnel d'une variante d'un dispositif de contrôle de vitesse selon l'invention permettant également une mise en oeuvre du procédé selon l'invention,
- les figures 4 et 5 illustrent des représentations graphiques de consignes de décélération, et;
- la figure 6 est une représentation graphique d'une consigne de réduction du couple moteur.

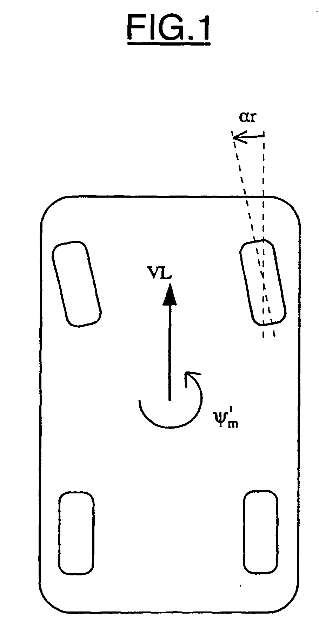

Sur la figure 1 qui représente un véhicule, en vue de dessus, $\alpha$r est l'angle de braquage des roues directrices, VL est la vitesse longitudinale du véhicule, $\psi'_m$ est la vitesse de lacet du véhicule, ou vitesse de rotation autour de l'axe vertical.

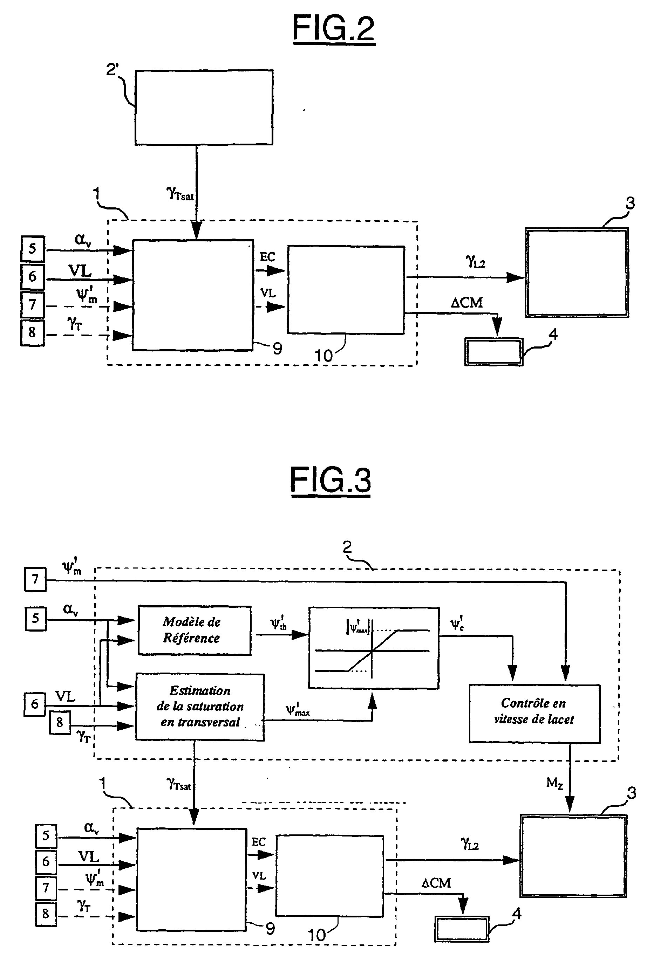

Comme le montre la figure 2, l'unité de contrôle en vitesse 1, selon l'invention, peut être intégrée dans une architecture comprenant également une unité 2' permettant d'estimer l'accélération latérale maximale à ne pas dépasser compte tenu des contraintes de stabilité et de sécurité comme par exemple la contrainte d'adhérence et de renversement, un dispositif de freinage 3 à énergie hydraulique, pneumatique, ou électrique, pouvant être activé au moins par une commande électronique, et permettant d'appliquer un couple de freinage sur chaque roue du véhicule indépendamment de la consigne de freinage provenant du conducteur, et une unité de contrôle du couple moteur 4, par exemple par variation de l'alimentation en énergie du moteur.

L'unité 1, qui comporte une unité 9 d'estimation de l'écart de comportement sous-vireur EC, reçoit un signal qui représente l'angle de braquage au volant $\alpha$v, au moyen d'un capteur 5 du type capteur potentiométrique placé sur la colonne de direction. L'unité 1 reçoit également un signal qui représente la vitesse longitudinale du véhicule VL, provenant d'un ou plusieurs capteurs 6 du type capteurs de rotation des roues utilisé dans les systèmes anti-blocage (ABS). L'unité 1 reçoit également un signal qui représente l'accélération latérale maximale $\gamma_{Tsat}$ à ne pas dépasser compte tenu des contraintes de stabilité et de sécurité, provenant de l'unité 2' ou de toute autre unité complémentaire pouvant fournir cette valeur, dépendant notamment de l'adhérence transversale du véhicule sur la chaussée ou bien d'un autre système provoquant une limitation de l'accélération transversale, comme c'est le cas par exemple pour un système anti-renversement.

Selon une variante de l'invention, l'unité 1 peut recevoir un signal qui représente la vitesse de lacet $\psi'_m$, provenant d'un élément 7 du type capteur de vitesse de rotation gyroscopique, ou d'une unité complémentaire pouvant fournir une estimation de cette grandeur à partir par exemple des signaux de vitesses de rotation des roues.

Selon une autre variante de l'invention, l'unité 1 peut recevoir un signal qui représente l'accélération transversale $\gamma_T$, provenant d'un élément 8 du type accéléromètre, ou d'une unité complémentaire pouvant fournir une estimation de cette grandeur à partir par exemple des signaux de vitesses de rotation des roues.

A la sortie de l'unité 9, un bloc 10 de calcul des consignes délivre la commande de décélération $\gamma L2$ au dispositif de freinage 3 et la consigne de réduction de la force motrice $\Delta CM$, à l'unité 4 de contrôle du couple moteur. Le dispositif de freinage 3, appliquera à chaque roue du véhicule une force de freinage obéissant dans la mesure du possible à cette décélération longitudinale de consigne de freinage $\gamma L2$, selon une stratégie classique de répartition spécifique sur les différentes roues, et selon les priorités à gérer entre cette décélération longitudinale de consigne de freinage $\gamma L2$ et la consigne de freinage en provenance du conducteur. Un exemple possible d'une telle stratégie de gestion consisterait à appliquer la plus grande des deux commandes précitées.

La consigne de réduction de la force motrice $\Delta CM$ évite que la force motrice ne s'oppose à l'action de freinage sur le véhicule. En outre, une réduction forte du couple moteur peut être génératrice de frein moteur, ce qui contribue à la décélération du véhicule.

Dans l'exemple de réalisation de la figure 3, l'unité de contrôle en vitesse 1, peut être intégrée dans une autre architecture comprenant en plus des éléments décrits précédemment, une unité de contrôle en vitesse de lacet 2 (ici par freinage asymétrique) transmettant au dispositif de freinage 3 une consigne de freinage asymétrique exprimée par un couple de lacet Mz, à partir de signaux d'angle et d'accélération transversale du véhicule provenant de capteurs spécifiques ou d'unités complémentaires pouvant fournir une estimation de ces grandeurs.

Le dispositif de freinage 3 appliquera à chaque roue du véhicule une force de freinage obéissant dans la mesure du possible aux décélérations longitudinales de consigne de freinage $\gamma L2$ et en couple de lacet Mz, selon une stratégie classique de répartition spécifique sur les différentes roues, et selon les priorités à gérer entre cette décélération longitudinale de consigne de freinage $\gamma L2$ et la consigne de freinage en provenance du conducteur. Un exemple possible d'une telle stratégie de gestion consisterait là encore à appliquer la plus grande des deux commandes.

Sur ce schéma d'architecture, l'unité de contrôle en vitesse de lacet 2 peut aussi bien agir sur le freinage asymétrique des roues, comme c'est le cas ici, que sur le braquage d'une ou plusieurs roues, ou sur la répartition du couple par action sur le différentiel mécanique.

D'une façon générale, l'unité de contrôle en vitesse 1 détermine tout d'abord, dans l'unité d'estimation de l'écart de comportement sous-vireur 9, une erreur de mouvement du véhicule ou écart de comportement EC, à partir des signaux d'angle de braquage $\alpha v$, de vitesse longitudinale du véhicule VL, éventuellement de vitesse de lacet du véhicule $\psi'_m$, éventuellement d'accélération transversale $\gamma_T$, ou éventuellement les deux, et d'accélération latérale maximale $\gamma_{Tsat}$ à ne pas dépasser compte tenu des contraintes de stabilité et de sécurité. EC peut être déterminé comme la différence $EC = \alpha v - \alpha vL$ entre l'angle volant mesuré $\alpha v$ et l'angle volant $\alpha vL$ correspondant à un comportement du véhicule à la limite de la saturation en accélération transversale, pour une même vitesse longitudinale et une même vitesse de lacet.

Plus précisément, si on ne dispose pas de signal $\psi'_m$, ni de signal $\gamma_T$

$$\alpha vL = (dem.L/VL^2 + DA).\gamma_{Tsat}.$$

Si on ne dispose que du signal $\psi'_m$

$$\alpha vL = dem.L.\,\dot{\psi}'_m\,/\,VL + DA.\gamma_{Tsat}$$

Si on ne dispose que du signal $\gamma_T$

$$\alpha vL = dem.L.\,\dot{\gamma}_T\,/\,VL + DA.\gamma_{Tsat}$$

Dans ces formules, dem est le ratio de démultiplication de la direction, L est l'empattement du véhicule, et DA est un coefficient classique caractérisant le comportement statico-dynamique de référence du véhicule.

Selon une variante de l'invention, EC peut être également calculé comme un écart entre la vitesse de lacet mesurée et la vitesse de lacet théorique issue d'un modèle dynamique de référence, type modèle deux-roues, limité en tenant compte de l'accélération latérale maximale $\gamma_{Tsat}$ à ne pas dépasser compte tenu des contraintes de stabilité et de sécurité.

EC peut être également calculé comme étant la différence entre la courbure du virage demandée par le conducteur par le volant et la courbure maximum dépendant notamment du signal d'accélération latérale maximale $\gamma_{Tsat}$ à ne pas dépasser compte tenu des contraintes de stabilité et de sécurité.

L'écart de comportement EC est ensuite utilisé dans le bloc de calcul des consignes de décélération 10 pour déterminer l'action sur les freins exprimée par l'intermédiaire d'une décélération longitudinale de consigne de freinage $\gamma L2$, l'action sur le moteur exprimée par la commande de réduction du couple moteur $\Delta CM$, et éventuellement l'action sur tout autre dispositif auxiliaire de ralentissement exprimé par l'intermédiaire d'une commande de décélération $\gamma L3$, afin de décélérer le véhicule. Ce dispositif auxiliaire de ralentissement peut être par exemple un système de ralentissement par effet électromagnétique à courants de Foucault, ou un système de ralentissement par fermeture de l'échappement, ou un système de ralentissement par résistance au lever de soupapes. Le bloc 10 peut être un régulateur, du type Proportionnel Intégral Dérivé par exemple, ayant pour objectif de maintenir EC à une valeur nulle, en agissant sur la décélération du véhicule.

Selon une variante de l'invention, le bloc 10 peut également réguler la décélération du véhicule à partir de la vitesse longitudinale VL, afin par exemple de décélérer le véhicule de la même façon quelle que soit la masse de chargement du véhicule.

Selon une autre variante de l'invention, si le bloc 10 reçoit le signal VL, EC peut aussi être une vitesse longitudinale de consigne établie dans l'unité 9 comme étant la vitesse maximum de passage de la courbe.

$$EC = dem.L. \, \psi'_m \, / \, (\alpha v - DA.\gamma_{Tsat})$$

Dans ce cas, le bloc 10 peut diminuer la vitesse longitudinale VL jusqu'à la valeur EC en agissant sur les freins, le moteur, et éventuellement tout dispositif auxiliaire de ralentissement par l'intermédiaire de $\gamma$L2, $\Delta$CM et éventuellement $\gamma$L3.

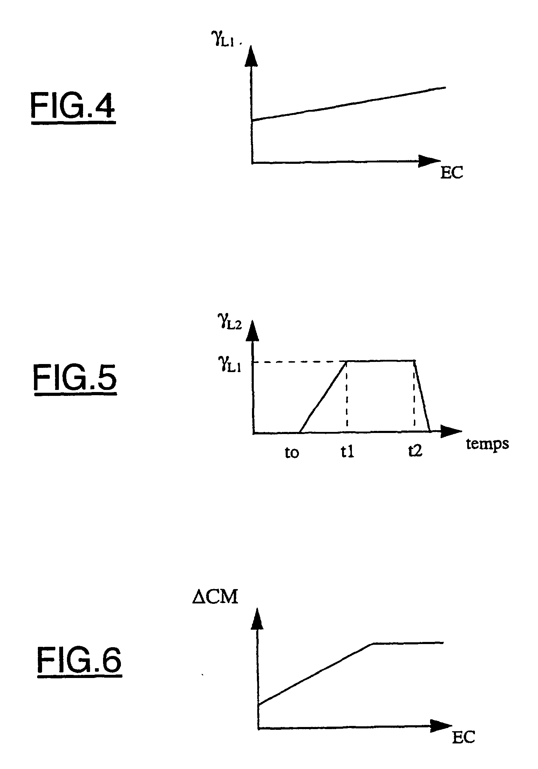

Un exemple de loi de détermination de $\gamma$L2 et $\Delta$CM en fonction de EC est illustré sur les figures 4, 5 et 6.

Comme le montrent ces figures, un exemple de procédé de détermination de la commande de freinage en fonction de l'écart de comportement EC peut être décrit selon deux étapes. Premièrement et selon la figure 4, une décélération cible $\gamma$L1 est calculée en fonction de EC, selon une loi qui peut être linéaire par morceaux et croissante. Ceci permet de décélérer le véhicule d'autant plus fort que l'écart de comportement est élevé. Deuxièmement et selon la figure 5, la décélération longitudinale de consigne de freinage $\gamma$L2 est modulée temporellement à partir de la consigne $\gamma$L1, de façon à obtenir une décélération progressive, caractérisée par exemple par un temps minimal de montée à la valeur de consigne $\gamma$L1, et un retour à zéro de la décélération également progressif.

Comme le montre la figure 6, un exemple de procédé de détermination de la commande de réduction de la force motrice $\Delta$CM en fonction de l'écart de comportement EC peut être décrit selon une loi de détermination linéaire par morceaux et croissante, ce qui permet de limiter d'autant plus le couple moteur que l'écart de comportement est élevé, tout en limitant la réduction de couple moteur à une valeur maximale prédéfinie.

L'invention permet de définir un procédé de contrôle et de correction automatique de la stabilité d'un véhicule routier par rapport à la trajectoire désirée par le conducteur, grâce à une réduction automatique et significative de la vitesse longitudinale qui permet de diminuer la valeur minimale du rayon de la trajectoire pouvant être suivie par le véhicule, tout en respectant le seuil d'accélération latérale maximale admissible défini par les contraintes de sécurité et de stabilité, et par là même de respecter le désir du conducteur qui est de suivre la trajectoire imposée par la route sans sous-virer.

**Revendications**

1. Procédé de contrôle du comportement dynamique d'un véhicule routier, dans lequel on calcule un écart de comportement en sous-virage (EC) du véhicule à partir de la valeur de l'angle de braquage ($\alpha$v) appliqué par le conducteur sur le volant et de la valeur courante de la vitesse longitudinale (VL) du véhicule, **caractérisé par le fait qu'**on tient compte en outre d'une valeur d'accélération latérale maximale ($\gamma_{Tsat}$) à ne pas dépasser compte tenu des contraintes de stabilité et de sécurité, cette accélération latérale maximale étant estimée en temps réel puis on calcule à partir de la valeur courante de cet écart de comportement, une valeur de décélération longitudinale de consigne ($\gamma$L2) destinée au système de freinage du véhicule ainsi qu'une valeur de consigne de réduction du couple moteur ($\Delta$CM), de façon à réduire la vitesse longitudinale du véhicule.

2. Procédé selon la revendication 1, **caractérisé par le fait qu'**on calcule l'écart de comportement (EC) également à partir de la valeur courante de la vitesse de lacet ($\psi'_m$) du véhicule.

3. Procédé selon la revendication 1 ou 2, **caractérisé par le fait qu'**on calcule l'écart de comportement (EC) également à partir de la valeur courante de l'accélération transversale ($\gamma_T$) du véhicule.

4. Procédé selon l'une des revendications précédentes, **caractérisé par le fait qu'**on applique aux roues du véhicule des forces de freinage tenant compte de ladite valeur de décélération longitudinale de consigne ($\gamma$L2) et de la valeur de consigne de freinage provenant de l'actionnement de la pédale de frein par le conducteur du véhicule.

5. Procédé selon la revendication 4, **caractérisé par le fait qu'**on privilégie la plus grande des deux valeurs de consigne pour déterminer les forces de freinage à appliquer au roues du véhicule.

6. Procédé selon l'une des revendications précédentes, **caractérisé par le fait qu'**on détermine ladite valeur de décélération longitudinale ($\gamma$L2) de consigne à partir d'une fonction de l'écart de comportement, linéaire par morceaux et croissante.

7. Procédé selon l'une des revendications 1 à 5, **caractérisé par le fait qu'**on détermine une décélération longitudinale cible de consigne ($\gamma$L1) à partir d'une fonction de l'écart de comportement, linéaire par morceaux et croissante, et **par le fait qu'**on détermine ladite valeur de décélération longitudinale de consigne ($\gamma$L2) en modulant temporellement ladite décélération longitudinale cible.

**8.** Procédé selon l'une des revendications précédentes, **caractérisé par le fait qu'**on détermine ladite valeur de consigne de réduction du couple moteur ($\Delta$CM) à partir d'une fonction de l'écart de comportement, linéaire par morceaux et croissante.

## Claims

**1.** Method of controlling the dynamic behaviour of a road vehicle, in which an understeer behaviour difference (EC) of the vehicle is calculated from the value of the lock angle ($\alpha$v) applied by the driver to the steering wheel and from the current longitudinal speed value (VL) of the vehicle, **characterized in that** account is also taken of a maximum lateral acceleration value ($\gamma_{Tsat}$) not to be exceeded in view of stability and safety constraints, this maximum lateral acceleration being estimated in real time, then, based on the current value of this behaviour difference, a set point longitudinal deceleration value ($\gamma$L2), intended for the braking system of the vehicle, and a motor torque reduction set point value ($\Delta$CM) are calculated, so as to reduce the longitudinal speed of the vehicle.

**2.** Method according to Claim 1, **characterized in that** the behaviour difference (EC) is also calculated based on the current value of the rate of yaw ($\psi_m$) of the vehicle.

**3.** Method according to Claim 1 or 2, **characterized in that** the behaviour difference (EC) is also calculated based on the current value of the transverse acceleration ($\gamma_T$) of the vehicle.

**4.** Method according to one of the preceding claims, **characterized in that** braking forces are applied to the wheels of the vehicle taking into account said set point longitudinal deceleration value ($\gamma$L2) and the braking set point value originating from actuation of the brake pedal by the driver of the vehicle.

**5.** Method according to Claim 4, **characterized in that** priority is given to the greater of the two set point values for determining the braking forces to be applied to the wheels of the vehicle.

**6.** Method according to one of the preceding claims, **characterized in that** said set point longitudinal deceleration value ($\gamma$L2) is determined based on a function of the behaviour difference, piecewise linear and increasing.

**7.** Method according to one of Claims 1 to 5, **characterized in that** a target set point longitudinal deceleration ($\gamma$L1) is determined based on a function of the behaviour difference, piecewise linear and increasing, and **in that** said set point longitudinal deceleration value ($\gamma$L2) is determined by temporally modulating said target longitudinal deceleration.

**8.** Method according to one of the preceding claims, **characterized in that** said motor torque reduction set point value ($\Delta$CM) is determined based on a function of the behaviour difference, piecewise linear and increasing.

## Patentansprüche

**1.** Regelungsverfahren für das dynamische Verhalten eines Straßenfahrzeuges, in dem eine Verhaltensabweichung bei Untersteuern (EC) des Fahrzeuges anhand des Wertes des Einschlagwinkels ($\alpha$v), der vom Fahrer an das Lenkrad angewandt wird, und des laufenden Wertes der Longitudinalgeschwindigkeit (VL) des Fahrzeuges berechnet wird, **dadurch gekennzeichnet, dass** darüber hinaus ein maximaler Lateralbeschleunigungswert ($\gamma_{Tsat}$), der angesichts der Stabilitäts- und Sicherheitszwänge nicht zu überschreiten ist, berücksichtigt wird, wobei diese maximale Lateralbeschleunigung in Echtzeit geschätzt ist, wonach anhand des laufenden Wertes von dieser Verhaltensabweichung ein Sollwert der Longitudinalverlangsamung ($\gamma$L2) für das Bremssystem des Fahrzeuges, sowie ein Sollwert der Reduzierung des Motordrehmoments ($\Delta$CM) berechnet wird, so dass die Longitudinalgeschwindigkeit des Fahrzeuges reduziert wird.

**2.** Verfahren nach Anspruch 1, **dadurch gekennzeichnet, dass** die Verhaltensabweichung (EC) ebenfalls anhand des laufenden Wertes der Giergeschwindigkeit ($\psi'_m$) des Fahrzeuges berechnet wird.

**3.** Verfahren nach Anspruch 1 oder 2, **dadurch gekennzeichnet, dass** die Verhaltensabweichung (EC) ebenfalls anhand des laufenden Wertes der Querbeschleunigung ($\gamma$T) des Fahrzeuges berechnet wird.

**4.** Verfahren nach einem der vorhergehenden Ansprüche, **dadurch gekennzeichnet, dass** an die Räder des Fahrzeuges Bremskräfte angewandt werden, die den Sollwert der Longitudinalverlangsamung ($\gamma$L2) und den Sollwert der Bremsung, die von der Betätigung des Bremspedals vom Fahrer des Fahrzeuges hervorgeht, berücksichtigen.

**5.** Verfahren nach Anspruch 4, **dadurch gekennzeichnet, dass** der größere der beiden Sollwerte bevorzugt wird, um die Bremskräfte, die an die Räder des Fahrzeuges anzuwenden sind, zu bestimmen.

**6.** Verfahren nach einem der vorhergehenden Ansprüche, **dadurch gekennzeichnet, dass** der Sollwert der Longitudinalverlangsamung ($\gamma$L2) anhand einer Funktion der Verhaltensabweichung, stückweise linear und zunehmend, bestimmt wird.

7. Verfahren nach einem der Ansprüche 1 bis 5, **dadurch gekennzeichnet, dass** eine Ziel-Soll-Longitudinalverlangsamung ($\gamma$L1) anhand einer Funktion der Verhaltensabweichung, stückweise linear und zunehmend, bestimmt wird, und **dadurch**, dass der Sollwert der Longitudinalverlangsamung ($\gamma$L2) bestimmt wird, indem die Ziel-Longitudinalverlangsamung zeitlich moduliert wird.

8. Verfahren nach einem der vorhergehenden Ansprüche, **dadurch gekennzeichnet, dass** der Sollwert der Reduzierung des Motordrehmoments ($\Delta$CM) anhand einer Funktion der Verhaltensabweichung, stückweise linear und zunehmend, bestimmt wird.

# FIG.1

# FIG.2

# FIG.3

## FIG.4

$\gamma_{L1}$

EC

## FIG.5

$\gamma_{L2}$

$\gamma_{L1}$

to    t1    t2    temps

## FIG.6

$\Delta CM$

EC